# EUROPEAN PATENT APPLICATION

(11) **EP 4 693 479 A1**
(43) Date of publication of application: **11.02.2026**
(21) Application number: 24778112.3
(22) Date of filing: 28.03.2024
(51) Int. Cl.: H01M 4/48, H01M 4/36, H01M 4/62, H01M 4/13, H01M 10/00

(54) **NEGATIVE ELECTRODE SHEET, BATTERY AND ELECTRIC DEVICE**

(30) Priority: 31.03.2023 CN 202310338143
(71) Applicant: BYD Company Limited, Shenzhen, Guangdong 518118 (CN)
(72) Inventor: SUN, Huajun, Shenzhen, Guangdong 518118 (CN); WANG, Xuewan, Shenzhen, Guangdong 518118 (CN)
(74) Representative: Mathys & Squire
(86) International application number: PCT/CN2024/084304
(87) International publication number: WO 2024/199326

(57) **Abstract**

A negative electrode sheet, a battery and an electric device. The negative electrode sheet comprises a current collector and a negative electrode active material layer that coats at least one surface of the current collector, wherein the negative electrode active material layer comprises a negative electrode active material, a silicon dioxide aerogel and a binder. the negative electrode active material is filled with the silicon dioxide aerogel; and the silicon dioxide aerogel accounts for 0.1% to 5% of the total mass of the negative electrode active material layer.

## Description

### PRIORITY INFORMATION

The present disclosure claims priority to Chinese Patent Application No. 202310338143.2, filed on March 31, 2023, which is incorporated herein by reference in its entirety.

### TECHNICAL FIELD

The present disclosure relates to the field of battery technologies, and in particular, to a negative electrode sheet, a battery, and an electric device.

### BACKGROUND

Secondary batteries (e.g., lithium-ion batteries) are widely used in new energy vehicles, portable electronic products, and large-scale energy storage devices due to their advantages such as high working voltage, high energy density, long cycle life, and small self-discharge. With the continuous pursuit of high energy density and fast charging technologies for secondary batteries in downstream applications, the compaction density and the thickness of a battery electrode sheet are increasing, which leads to serious problems such as low porosity and poor electrolyte wettability for negative electrode sheets. In the prior art, conductivities of negative electrode sheets are improved by increasing the content of a conductive agent in the negative electrode sheet, thereby promoting conductive capability of carriers (for example, lithium ions) in the negative electrode sheet. However, excessive conductive agents will increase the electrical contact interface between the negative electrode sheet and the electrolyte, resulting in an increase in side reactions of the negative electrode sheet and a decrease in the cycle life of the secondary battery.

Therefore, there is a need to provide a new negative electrode sheet to satisfy application requirements of fast charging performance and long cycle life of the secondary batteries (e.g., lithium-ion batteries).

### SUMMARY

In view of this, the present disclosure provides a negative electrode sheet. The negative electrode sheet can improve liquid holding capability of the negative electrode sheet and carrier ion transmission capability, thereby effectively increasing cycle performance and fast charging performance of a battery.

A first aspect of the present disclosure provides a negative electrode sheet, wherein the negative electrode sheet includes a current collector and a negative electrode active material layer coated on at least one surface of the current collector; the negative electrode active material layer including a negative electrode active material, a silica aerogel, and a binder; the silica aerogel being filled in the negative electrode active material; and the silica aerogel accounting for 0.1% to 5% of total mass of the negative electrode active material layer.

In the present disclosure, the negative electrode active material layer of the negative electrode sheet includes 0.1% to 5% of silica aerogel, which is favorable for improving rate performance and cycle life of the negative electrode sheet and the battery. First, a porous structure of the silica aerogel is beneficial for enhancing an electrolyte absorption effect of the negative electrode sheet, so that the electrolyte penetrates from the pores of the silica aerogel to the negative electrode active material, shortens carrier ion (lithium ion) conduction paths, and promotes electrochemical kinetics performance of the negative electrode sheet and the battery. Second, 0.1% to 5% of silica aerogel is filled in the negative electrode active material, which is beneficial for improving the pore structure of the negative electrode sheet, relieving uneven pores of the electrode sheet caused by disorderly expansion and contraction of the negative electrode active material during battery charging and discharging processes, and further improving polarization effects and rate performance of the battery. Third, the silica aerogel has a low dielectric constant, which can reduce side reactions between a conductive interface exposed by the negative electrode sheet and the electrolyte, and increase the cycle life of the battery.

A second aspect of the present disclosure provides a battery, including a positive electrode sheet, an electrolyte, a separator, and the negative electrode sheet provided in the first aspect of the present disclosure.

Because the battery includes the negative electrode sheet provided in the first aspect of the present disclosure, the battery has high rate performance and cycle life, and meets more application requirements.

A third aspect of the present disclosure provides an electric device, including the battery provided in the second aspect of the present disclosure.

### BRIEF DESCRIPTION OF THE DRAWINGS

FIG. 1 is an SEM image of a cross section of a vertical current collector of a negative electrode sheet provided in Example 1 of the present disclosure.
FIG. 2 is an EDS element distribution picture of C, O, Si, and Cu in the SEM image provided in FIG. 1 of the present disclosure.

### DESCRIPTION OF EMBODIMENTS

The present disclosure is further described below by using embodiments and comparative examples, which are merely used to illustrate the present disclosure, and the present disclosure is not limited to the following embodiments. Any modification or equivalent replacement of the technical solutions of the present disclosure without departing from the scope of the technical solutions of the present disclosure shall fall within the protection scope of the present disclosure.

An embodiment of the present disclosure provides a negative electrode sheet, wherein the negative electrode sheet includes a current collector and a negative electrode active material layer coated on at least one surface of the current collector; the negative electrode active material layer includes a negative electrode active material, a silica aerogel, and a binder; and the silica aerogel accounts for 0.1% to 5% of total mass of the negative electrode active material layer.

In the present disclosure, the negative electrode active material layer of the negative electrode sheet includes 0.1% to 5% of silica aerogel, which is favorable for improving rate performance and cycle life of the negative electrode sheet and the battery. First, a porous structure of the silica aerogel is beneficial for enhancing electrolyte absorption effects of the negative electrode sheet, so that the electrolyte penetrates from the pores of the silica aerogel to the negative electrode active material, shortens carrier ion (lithium ion) conduction paths, and promotes electrochemical kinetics performance of the negative electrode sheet and the battery. Second, 0.1% to 5% of silica aerogel is filled in the negative electrode active material, which is beneficial for improving the pore structure of the negative electrode sheet, relieving uneven pores of the electrode sheet caused by disorderly expansion and contraction of the negative electrode active material during battery charging and discharging processes, and further improving polarization effects and rate performance of the battery. Third, the silica aerogel has a low dielectric constant, which can reduce side reactions between a conductive interface exposed by the negative electrode sheet and the electrolyte, and increase the cycle life of the battery.

In addition, the silica aerogel has stable chemical properties and does not destroy electrochemical reaction systems inside the battery; has good thermal insulation and can improve safety performance of the battery; and has a low price that meets industrial-grade application requirements.

For example, the silica aerogel may account for 0.1%, 0.5%, 1%, 2%, 3%, 5%, or the like of the total mass of the negative electrode active material layer.

In the present disclosure, the negative electrode active material layer may be coated on one surface of the current collector. The negative electrode active material layer may alternatively be coated on both surfaces of the current collector. When the negative electrode active material layer is coated on both surfaces of the current collector, the thickness, the surface density, the component content, and the like of the negative electrode active material layers respectively located on both surfaces of the current collector may be independently designed according to application requirements, and may be the same or different.

In the present disclosure, the negative electrode active material may be a carbon-based material.

In the present disclosure, the negative electrode active material may alternatively be a combination of a carbon-based material and one or more of a silicon-based material, a tin-based material, or a lithium titanate material, wherein the carbon-based material accounts for 80% to 97% of the total mass of the negative electrode active material.

The carbon-based material may be one or a combination of artificial graphite, natural graphite, soft carbon, hard carbon, mesophase carbon microbeads, and carbon fiber.

The silicon-based material may be one or a combination of elemental silicon, silicon oxide (SiOₓ, 0<x<2 ), and silicon alloy. The tin-based material may be one or a combination of elemental tin, tin oxide (SnOₓ, 0<x≤2 ), and tin alloy.

In the present disclosure, the current collector may be any one of copper foil, carbon coated copper foil, polymer coated copper foil, carbon cloth, carbon nanotube film, or carbon paper.

In the present disclosure, the current collector may alternatively be any one of aluminum foil, carbon coated aluminum foil, and polymer coated aluminum foil (e.g., used for a sodium ion battery negative current collector).

In the present disclosure, the binder includes one or a combination of styrene butadiene rubber (SBR), carboxymethyl cellulose (CMC), polyacrylic acid (PAA), polyacrylic ethylene acrylic acid (PEAA), sodium alginate, carboxymethyl chitosan, polyacrylonitrile (PAN), and polyvinyl alcohol (PVA).

In some implementations of the present disclosure, a porosity of the negative electrode sheet is 20% to 80%.

In the present disclosure, the negative electrode sheet includes the silica aerogel. It will be understood that the pores of the negative electrode sheet include pores of the silica aerogel, gaps formed by disorderly deposition of the silica aerogel and the negative electrode active material, and gaps formed after disorderly deposition of the negative electrode active material. The porosity of the negative electrode sheet is in a range of 20% to 80%, shuttle efficiency of the carrier

(lithium ion) in the negative electrode sheet is good, and the negative electrode sheet and the battery have high rate performance. In addition, the negative electrode sheet has a high liquid storage capacity, which can provide more sufficient electrolytes in a battery cycle process and increase the cycle life of the battery. For example, the porosity of the negative electrode sheet may be 20%, 30%, 50%, 60%, 80%, or the like.

In the present disclosure, the porosity of the negative electrode sheet is preferably 30% to 60%. If the porosity of the negative electrode sheet is within this range, higher mechanical performance of the negative electrode sheet can be ensured, and cycle stability of the battery can be further improved.

A method for determining the porosity of the negative electrode sheet is: cutting the negative electrode sheet into a membrane piece with a specific area, drying the membrane piece in a vacuum drying oven at 120°C for 12h, taking it out and putting it in a dryer for cooling, and then testing the porosity. First, a thickness of a sample is measured by using a ten-thousandth gauge (a thickness of the current collector foil is deduced), an apparent volume (V1) of the sample is calculated according to a surface area and the thickness of the sample; and a true volume (V2) of the sample is measured by using a true density analyzer (a volume of the current collector foil is deduced). It can be obtained that: the porosity of the negative electrode sheet = (true volume (V2)/apparent volume (V1))*100%.

In some embodiments of the present disclosure, a dielectric constant of the silica aerogel is ε, where 0<ε≤10. That is, the silica aerogel has a non-conductive property under an action of an external electric field, so that a contact interface between the negative electrode sheet and the electrolyte can be stabilized, side reactions between the negative electrode sheet and the electrolyte can be alleviated, and Coulombic efficiency of the battery can be improved. In addition, over-consumption of the electrolyte can be reduced, and the cycle life of the battery can be increased.

In some implementations of the present disclosure, a bulk density of the silica aerogel is 0.003 to 0.500 g/cm³. For example, the bulk density of the silica aerogel may be 0.003 g/cm³, 0.010 g/cm³, 0.050 g/cm³, 0.100 g/cm³, 0.300 g/cm³, 0.500 g/cm³, or the like.

It will be understood that, in charging and discharging processes of the negative electrode sheet, the pore structure of the negative electrode sheet randomly changes with expansion and contraction of the negative electrode active material, resulting in uneven distribution of pores in the negative electrode sheet, which leads to an obvious difference in electrolyte diffusion and carrier ion transfer fluxes. The rate of the battery cannot be fully utilized. In this way, the bulk density of the silica aerogel is in the range of 0.003 to 0.500 g/cm³, and electrolyte ions in the negative electrode sheet have a proper storage amount and diffusion path, thereby further improving the rate performance of the battery. When the bulk density of silica aerogel is too low (less than 0.003 g/cm³), dispersibility of the silica aerogel is affected in the negative electrode sheet. When the bulk density of the silica aerogel in the negative electrode sheet is too high (more than 0.5 g/cm³), a buffering effect on expansion and contraction of the negative electrode active material is not apparent.

In addition, 0.1% to 5% of silica aerogel with a bulk density in the range of 0.003 to 0.500 g/cm³ can also be used as an effective buffer medium to prevent irreversible damage to the negative electrode sheet caused by excessive pressure when the negative electrode sheet is rolled, which otherwise prevents the electrolyte infiltrating the negative electrode sheet.

In some implementations of the present disclosure, a specific surface area of the silica aerogel is 100 to 1500 m²/g. For example, the specific surface area of the silica aerogel may be 100 m²/g, 300 m²/g, 500 m²/g, 800 m²/g, 1000 m²/g, 1200 m²/g, or 1500 m²/g.

It will be understood that, the silica aerogel has a relatively high specific surface area, can adsorb more electrolytes, and improve a liquid storage capability of the negative electrode sheet. In this way, when the specific surface area of the silica aerogel is in the range of 100 to 1500 m²/g, the cycle life of the battery can be further increased.

In some implementations of the present disclosure, the silica aerogel includes mesopores and macropores, and a sum of volumes of the mesopores and the macropores account for 60% to 99.99% of a total pore volume of the silica aerogel. For example, the sum of the volumes of the mesopores and the macropores may account for 60%, 70%, 80%, 85%, 90%, 95%, or 99.99% of the total pore volume of the silica aerogel.

Internationally, pores are generally classified into three categories according to their sizes: micropores, mesopores (i.e., intermediate pores), and macropores. Pores with a bore diameter less than 2 nm are micropores; pores with a bore diameter in a range of 2 to 50 nm are mesopores; and pores with a bore diameter greater than 50 nm are macropores. The silica aerogel contains mesopores, which is beneficial to storage of the electrolyte, can provide a buffer pool for the electrolyte to be released when necessary, improve storage capacity in the negative electrode sheet, and is beneficial for improving circulation stability and rate performance of the negative electrode sheet. The silica aerogel also contains macropores, which provide a channel for transport of the electrolyte. Electrolyte ions stored in the mesopores diffuse to the surface of the negative electrode active material through the macropore channel, thereby reducing diffusion paths of the electrolyte in the negative electrode sheet and improving the rate performance of the battery. In this way, when the sum of the volumes of the mesopores and the macropores in the silica aerogel accounts for 60% to 99.99% of the total pore volume of the silica aerogel, the battery has better cycle performance and rate performance.

The sum of the volumes of the mesopores and the macropores in the silica aerogel is obtained based on a ratio of the sum of pore volumes of the mesopores and the macropores to a total cumulative pore volume in a BET test result of the silica aerogel.

In some implementations of the present disclosure, the silica aerogel has an average particle size of 0.05 to 100 µm.

The average particle size of the silica aerogel disclosed in the present invention is in the range of 0.05 to 100 µm, which can meet use requirements of negative electrode active material in different particle size ranges, achieve a better filling effect, and further facilitate absorption and diffusion of the electrolyte. For example, the particle size of the silica aerogel may be 0.05 µm, 0.1 µm, 0.5 µm, 1.0 µm, 2.0 µm, 3.0 µm, 10 µm, 20 µm, 50 µm, or 100 µm.

In the present disclosure, the average particle size of the silica aerogel is further preferably 0.5 to 50 µm. When the average particle size of the silica aerogel is too small and surface energy is too large, this will affect dispersibility of the silica aerogel in the negative electrode sheet. When the average particle size of the silica aerogel is too large, this will affect a contact effect of the silica aerogel with the negative electrode active material.

A method for measuring the average particle size of the silica aerogel is as follows: The silica aerogel is ultrasonically dispersed in absolute ethanol for 5 minutes and tested by using a laser particle size analyzer. D50 is the particle size of the silica aerogel, that is, a particle size corresponding to a volume proportion less than 50% of the total volume on a particle size distribution curve.

In some implementations of the present disclosure, the negative electrode active material layer further includes a conductive agent.

In the present disclosure, the negative electrode sheet includes both the silica aerogel and the conductive agent, and electrochemical performance of the battery can be further improved through a synergistic effect of the silica aerogel and the conductive agent.

In some implementations of the present disclosure, the conductive agent accounts for 0.1% to 5% of total content of the active material layer.

It will be understood that the conductive agent in the negative electrode sheet is filled in the negative electrode active material, and can store liquid and conduct electricity to some extent, but an exposed conductive interface thereof increases side reactions of the electrolyte. Therefore, the content of the conductive agent in the above range can ensure conductivity and a liquid storage amount of the negative electrode sheet, suppress side reactions of the electrode sheet, and ensure the rate performance and the cycle life of the battery.

In some implementations of the present disclosure, a mass ratio of the silica aerogel to the conductive agent is (0.2-10):1. In this way, when the mass ratio of the silica aerogel to the conductive agent is in the range of (0.2-10):1, the synergistic effect between the silica aerogel and the conductive agent is stronger, and comprehensive performance of the battery is better.

In the present disclosure, the conductive agent may be one or a combination of conductive carbon black, carbon nanotubes, graphene, and carbon fibers. A conductive carbon black material may be one or a combination of acetylene black, furnace black, channel black, thermal black, lamp black, and Ketjen black. Carbon nanotubes may be one or a combination of carbon nanotubes with different tube diameters (1 to 100 nm) and different tube lengths (0.05 to 100 µm). Graphene may be one or a combination of graphene with different quantities of layers (1 to 1000 layers).

Correspondingly, an embodiment of the present disclosure further provides a battery, wherein the battery includes a positive electrode sheet, an electrolyte, a separator, and the negative electrode sheet provided in the first aspect. Because the battery includes the negative electrode sheet provided in the first aspect of the present disclosure, the battery has high rate performance and cycle life, and meets more application requirements.

In the present disclosure, the battery may be any one of a lithium ion battery or a sodium ion battery.

In the present disclosure, the positive electrode sheet includes a current collector and a positive electrode active material layer coated on at least one surface of the current collector. The active material layer includes a positive electrode active material, a conductive agent, and a binder.

In the present disclosure, the positive electrode active material layer may be coated on one side of the current collector or may be coated on both sides of the current collector. When the positive electrode active material layer is coated on both surfaces of the current collector, the thickness, the surface density, the component content, and the like of the positive electrode active material layers respectively located on both surfaces of the current collector may be independently designed according to application requirements, and may be the same or different.

In the present disclosure, the positive current collector may be any one of aluminum foil, carbon coated aluminum foil, polymer coated aluminum foil, carbon cloth, carbon nanotube film, or carbon paper.

In the present disclosure, the separator may be one or a composite separator of polyethylene, polypropylene, and polyvinylidene fluoride.

In the present disclosure, the positive electrode active material may be one or a combination of lithium cobalt oxide, lithium nickel oxide, lithium manganese oxide, lithium nickel manganese oxide, lithium nickel cobalt manganese oxide, lithium nickel cobalt aluminum oxide, and olivine-structured lithium-containing phosphate. The positive electrode active material is suitable for a lithium-ion battery.

In the present disclosure, the positive electrode active material may alternatively be one or a combination of transition metal oxide, polyanionic compound, organic polymer, and Prussian blue/white analog materials. The positive electrode active material is suitable for a sodium ion battery.

In the present disclosure, the electrolyte is an organic solvent in which carrier ions are dissolved. The present disclosure imposes no limitation on the electrolyte, which may be self-dispensed according to an actual situation.

An embodiment of the present disclosure further provides an electric device. By using the battery provided in the embodiment of the present disclosure, the electric device may have higher market competitiveness.

In some implementations of the present disclosure, the electric device includes but is not limited to a wearable electronic device such as a mobile phone, a notebook computer, a tablet computer, or a smart watch, an electronic cigarette, a new energy vehicle, an electric moped, an energy storage base station, or the like.

The following further describes the technical solutions of the present disclosure in a plurality of examples.

### Example 1

A negative electrode active material (artificial graphite), a conductive agent (conductive carbon black), sodium carboxymethyl cellulose (CMC), styrene butadiene rubber (SBR), and silica aerogel are mixed according to a ratio (mass ratio) of 96:0.5:1:2:0.5. Powder materials and deionized water are stirred by using a homogenizer to form negative electrode slurry, and the slurry is evenly coated on a copper foil. For the silica aerogel, a dielectric constant is 2.1; an average particle size (D50) is 3 µm; a sum of volumes of mesopores and macropores is 65%; a bulk density is 0.4 g/cm³; and a specific surface area is 500 m²/g.

A positive electrode active material lithium iron phosphate (LiFePO₄), a conductive agent (CNT), and a binder (PVDF) are mixed according to a ratio (mass ratio) of 97:1:2. Powder materials and NMP are stirred by using the homogenizer to form positive electrode slurry, and the slurry is evenly coated on an aluminum foil.

Ethylene carbonate (EC), dimethyl carbonate (DMC), and ethyl methyl carbonate (EMC) are mixed according to a volume ratio of 1:1:1 to prepare an electrolyte containing 1M LiPF₆.

A polypropylene separator is used to prepare a 1.5 Ah stacked battery.

### Example 2

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the silica aerogel is 96:0.9:1:2:0.1.

### Example 3

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the silica aerogel is 96:0.1:1:2:0.9.

### Example 4

A difference from Example 1 lies only in that: the mass ratio of the negative active material (artificial graphite), the conductive agent (conductive carbon black SP), the thickener (CMC), the binder (SBR), and the silica aerogel is 94.55:2.0:1:2:0.45.

### Example 5

A difference from Example 1 lies only in that: the mixing ratio of the negative active material (artificial graphite), the conductive agent (conductive carbon black SP), the thickener (CMC), the binder (SBR), and the silica aerogel is 94.8:0.2:1:2:2.0.

### Example 6

A difference from Example 1 lies only in that: the mass ratio of the negative active material (artificial graphite), the conductive agent (conductive carbon black SP), the thickener (CMC), the binder (SBR), and the silica aerogel is 96:0:1:2:1.

### Example 7

A difference from Example 1 lies only in that: the mass ratio of the negative active material (artificial graphite), the conductive agent (conductive carbon black SP), the thickener (CMC), the binder (SBR), and the silica aerogel is 95:0:1:2:2.

### Example 8

A difference from Example 1 lies only in that: the mass ratio of the negative active material (artificial graphite), the conductive agent (conductive carbon black SP), the thickener (CMC), the binder (SBR), and the silica aerogel is 94:0:1:2:3.

### Example 9

A difference from Example 1 lies only in that: the mass ratio of the negative active material (artificial graphite), the conductive agent (conductive carbon black SP), the thickener (CMC), the binder (SBR), and the silica aerogel is 93:0:1:2:4.

### Example 10

A difference from Example 1 lies only in that: the mass ratio of the negative active material (artificial graphite), the conductive agent (conductive carbon black SP), the thickener (CMC), the binder (SBR), and the silica aerogel is 92:0:1:2:5.

### Example 11

A difference from Example 10 lies only in that: the sum of the volumes of the mesopores and the macropores of the silica aerogel is 42%.

### Example 12

A difference from Example 10 lies only in that: the sum of the volumes of the mesopores and the macropores of the silica aerogel is 99%.

### Example 13

A difference from Example 10 lies only in that: the bulk density of the silica aerogel is 0.8 g/cm³.

### Example 14

A difference from Example 10 lies only in that: the bulk density of the silica aerogel is 0.02 g/cm³.

### Example 15

A difference from Example 10 lies only in that: the specific surface area of the silica aerogel is 1450 m²/g.

### Example 16

A difference from Example 10 lies only in that: the particle size of the silica aerogel is 20 µm; and the specific surface area is 250 m²/g.

### Example 17

A difference from Example 10 lies only in that: the particle size of the silica aerogel is 20 µm; and the specific surface area is 1000 m²/g.

To highlight beneficial effects of the embodiments of the present disclosure, the following comparative examples are provided.

### Comparative Example 1

A difference from Example 1 lies only in that: the mass ratio of the negative electrode active material (artificial graphite), the conductive agent (conductive carbon black), the sodium carboxymethyl cellulose (CMC), the styrene butadiene rubber (SBR), and the silica aerogel is 91.99:5:1:2:0.01.

### Comparative Example 2

A difference from Example 5 lies only in that: the mass ratio of the negative electrode active material (artificial graphite), the conductive agent (conductive carbon black), the sodium carboxymethyl cellulose (CMC), the styrene butadiene rubber (SBR), and the silica aerogel is 90:0:1:2:7.

The content of the silica aerogel, the content of the conductive agent, and the porosity parameter in the negative electrode sheet of the present disclosure are shown in Table 1. Performance test results of the battery are shown in Table 2.

**Table 1**

| Test No. | Silica aerogel (%) | Content of conductive agent (%) | Porosity of negative electrode sheet (%) |
|---|---|---|---|
| Example 1 | 0.5 | 0.5 | 35.2 |
| Example 2 | 0.1 | 0.9 | 25.8 |
| Example 3 | 0.9 | 0.1 | 44.0 |
| Example 4 | 0.45 | 2.0 | 36.3 |
| Example 5 | 2.0 | 0.2 | 58 |
| Example 6 | 1 | 0 | 48.6 |
| Example 7 | 2 | 0 | 55.4 |
| Example 8 | 3 | 0 | 63.5 |
| Example 9 | 4 | 0 | 69.0 |
| Example 10 | 5 | 0 | 74.5 |
| Example 11 | 5 | 0 | 71.0 |
| Example 12 | 5 | 0 | 79.5 |
| Example 13 | 5 | 0 | 72.0 |
| Example 14 | 5 | 0 | 81.4 |
| Example 15 | 5 | 0 | 79.5 |
| Example 16 | 5 | 0 | 71.0 |
| Example 17 | 5 | 0 | 77 |
| Comparative Example 1 | 0.01 | 5 | 23.1 |
| Comparative Example 2 | 7 | 0 | 86.3 |

### Electrochemical performance test

The batteries prepared above (including the batteries in the comparative examples) are subjected to room-temperature testing using the Land Electronics CT3002A battery testing system, and test results are summarized in Table 2.

Battery discharge capacity test: At 25°C, a 0.1C/0.1C cycle test is performed on the battery within a voltage range of 2.0V to 3.8V (wherein charging is performed at 0.1C to a voltage of 3.8V, followed by a 30-min rest, then discharging is performed at 0.1C to a voltage of 2.0V - this sequence constituted one cycle). After 3 cycles, the discharge capacity of the battery in the third cycle is recorded and used as the discharge capacity of the battery.

### First-cycle charge/discharge test:

At 25°C, a 0.1C/0.1C cycle test is performed on the battery within a voltage range of 2.0V to 3.8V (charging is performed at 0.1C to a voltage of 3.8V, followed by a 10-min rest, then discharging is performed at 0.1C to a voltage of 2.0V - this sequence constituted one cycle). The first-cycle charge specific capacity and discharge specific capacity of the battery are recorded, and the first-cycle charge/discharge efficiency is calculated therefrom, wherein the first-cycle discharge efficiency of the battery (%) is calculated as (first-cycle charge specific capacity/first-cycle discharge specific capacity) * 100%.

### Discharge rate test:

At 25°C, the battery is charged at 0.1C to a voltage of 3.8V, followed by a 30-min rest, then discharged at a 3C rate to a voltage of 2.0V. This cycle is repeated three times sequentially. The charge/discharge data from the third cycle is used to calculate discharge efficiency of the battery for rate performance evaluation. The discharge rate (%) is calculated as: (third-cycle discharge specific capacity (3C)/third-cycle charge specific capacity (0.1C)) * 100%.

### Charge rate test:

At 25°C, the battery is charged at 3C to a voltage of 3.8V, followed by a 30-min rest, and then discharged at 0.1C to a voltage of 2.0V. This cycle is repeated three times sequentially. The charge/discharge data from the third cycle is used to calculate charge efficiency of the battery. The charge rate (%) is calculated as: (third-cycle discharge specific capacity (0.1C)/third-cycle charge specific capacity (3C)) * 100%.

Cycle life test: At 25°C, the battery is charged at 1C to a voltage of 3.8V, followed by a 10-min rest, and then discharged at 1C to a voltage of 2.0V. This cycle is repeated 1000 times sequentially. The capacity retention rate is recorded, wherein the capacity retention rate after 1000 cycles (%) is calculated as: (discharge specific capacity after 1000 cycles/discharge specific capacity after the third cycle) * 100%.

**Table 2**

| Test No. | Battery discharge capacity (Ah) | Capacity retention rate after 1000 cycles (%) | Discharge rate (%) | Charge rate (%) | First-cycle charge/discharge efficiency (%) |
|---|---|---|---|---|---|
| Example 1 | 1.44 | 92.5 | 94.6 | 91.7 | 89.7 |
| Example 2 | 1.43 | 91.4 | 91.2 | 89.6 | 88.6 |
| Example 3 | 1.46 | 92.7 | 93.7 | 91.6 | 90.2 |
| Example 4 | 1.42 | 91.9 | 91.6 | 90.4 | 87.8 |
| Example 5 | 1.42 | 92.9 | 94.1 | 91.9 | 90.8 |
| Example 6 | 1.41 | 92.1 | 93.1 | 91.2 | 90.1 |
| Example 7 | 1.39 | 92.4 | 93.8 | 91.6 | 90.3 |
| Example 8 | 1.36 | 91.8 | 93.0 | 90.8 | 90.0 |
| Example 9 | 1.35 | 89.9 | 92.0 | 89.3 | 89.4 |
| Example 10 | 1.33 | 89.2 | 91.5 | 88.9 | 88.7 |
| Example 11 | 1.31 | 88.5 | 89.8 | 88.0 | 88.5 |
| Example 12 | 1.39 | 89.4 | 91.3 | 88.7 | 88.6 |
| Example 13 | 1.34 | 89.1 | 90.5 | 88.0 | 88.9 |
| Example 14 | 1.37 | 89.6 | 91.3 | 88.6 | 88.4 |
| Example 15 | 1.32 | 88.5 | 90.8 | 88.0 | 88.3 |
| Example 16 | 1.35 | 89.3 | 91.4 | 88.7 | 88.6 |
| Example 17 | 1.36 | 89.5 | 91.6 | 88.9 | 88.7 |
| Comparative Example 1 | 1.29 | 83.8 | 86.9 | 85.2 | 85.1 |
| Comparative Example 2 | 1.23 | 86.4 | 87.5 | 86.9 | 88.4 |

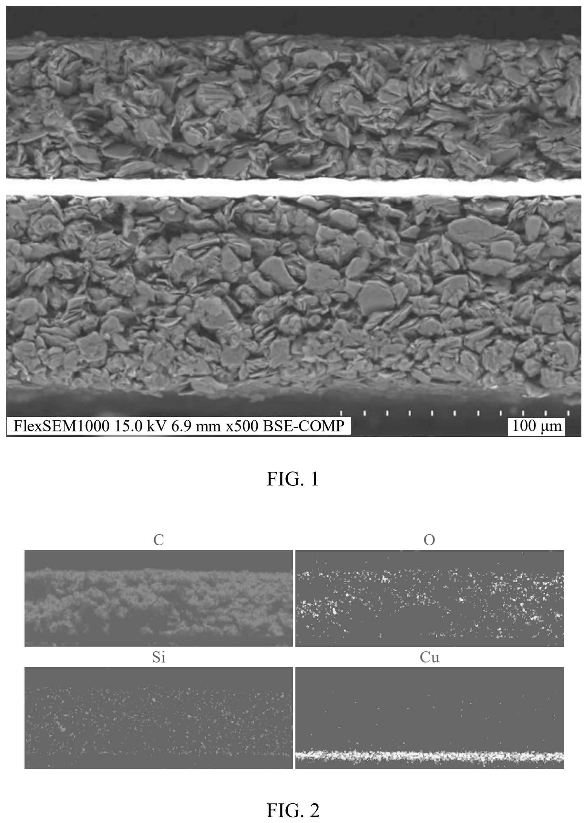

As seen from the data in Tables 1 to 2, compared with Comparative Example 1 and Comparative Example 2, the negative electrode sheet provided in the embodiments of the present disclosure contains silica aerogel at an appropriate mass percentage, the silica aerogel partially or entirely replaces the conductive agent to be filled in the negative electrode active materials, regulating the porosity of the negative electrode sheet, which can significantly improve rate performance (discharge rate and charge rate) and cycle performance of the battery. FIG. 1 and FIG. 2 are an SEM image of a vertical current collector cross-section of the negative electrode sheet in Example 1 of the present disclosure and its corresponding EDS image. From the figures, it can be seen that the silicon element (silica aerogel) is evenly dispersed in the negative electrode material. In Comparative Example 1, an extremely small amount of silica aerogel is added to the negative electrode sheet, resulting in low porosity of the electrode sheet, a tortuous diffusion path for the electrolyte, and consequently high lithium-ion transfer impedance, thereby leading to poor rate performance of the battery. It can be seen that by adding the silica aerogel to the negative electrode sheet to optimize the pore structure within the negative electrode sheet and increase the porosity and the liquid absorption rate of the negative electrode sheet, this significantly benefits the promotion of electrolyte adsorption and migration.

In addition, from the data of Examples 1 to 6, it can be found that by adding both an appropriate conductive agent and silica aerogel to the negative electrode sheet, a synergistic effect exists between the two, which can further enhance electronic conductivity and ionic conductivity of the negative electrode sheet, thereby further improving rate performance and cycle performance of the battery.

From the data of Examples 10 to 12, it can be found that changing the volumes of the mesopores and macropores of the silica aerogel in the negative electrode sheet affects porosity and cycle performance of the electrode sheet.

From the data of Example 10 and Examples 13 and 14, it can be found that the density of the silica aerogel affects rate performance of the battery.

From the data of Examples 10 and 15 to 17, it can be found that the specific surface area of the silica aerogel affects the cycle of the battery.

The foregoing descriptions are example implementations of present disclosure. It should be noted that a person of ordinary skill in the art may further make several improvements and refinements on this application without departing from the principles of present disclosure. These improvements and refinements also fall within the protection scope of present disclosure.

## Claims

1. A negative electrode sheet, wherein the negative electrode sheet comprises a current collector and a negative electrode active material layer coated on at least one surface of the current collector; the negative electrode active material layer comprises a negative electrode active material, a silica aerogel, and a binder; the silica aerogel is filled in the negative electrode active material; and the silica aerogel accounts for 0.1% to 5% of total mass of the negative electrode active material layer.

2. The negative electrode sheet according to claim 1, wherein a porosity of the negative electrode sheet is 20% to 80%.

3. The negative electrode sheet according to claim 1 or 2, wherein a bulk density of the silica aerogel is 0.003 to 0.500 g/cm³.

4. The negative electrode sheet according to any one of claims 1 to 3, wherein a specific surface area of the silica aerogel is 100 to 1500 m²/g.

5. The negative electrode sheet according to any one of claims 1 to 4, wherein the silica aerogel comprises mesopores and macropores, and a sum of volumes of the mesopores and the macropores account for 60% to 99.99% of a total pore volume of the silica aerogel.

6. The negative electrode sheet according to any one of claims 1 to 5, wherein an average particle size of the silica aerogel is 0.05 to 100 µm.

7. The negative electrode sheet according to any one of claims 1 to 6, wherein the negative electrode active material layer further comprises a conductive agent.

8. The negative electrode sheet according to claim 7, wherein the conductive agent accounts for 0.1% to 5% of the total mass of the negative electrode active material layer.

9. The negative electrode sheet according to claim 7 or 8, wherein a mass ratio of the silica aerogel to the conductive agent is (0.2-10):1.

10. A battery, comprising a positive electrode sheet, an electrolyte, a separator, and the negative electrode sheet according to any one of claims 1 to 9.

11. An electric device, wherein the electric device comprises the battery according to claim 10.
